# EUROPÄISCHE PATENTSCHRIFT

(11) **EP 0 526 826 B1**
(45) Veröffentlichungstag und Bekanntmachung des Hinweises auf die Patenterteilung: **08.10.1997**
(21) Anmeldenummer: 92112883.1
(22) Anmeldetag: 29.07.1992
(51) Int. Cl.: B60R 11/06

(54) **Vorrichtung zum Befestigen eines Wagenhebers in einem Kraftfahrzeug**
Mounting for a jack in a motor vehicle
Dispositif de fixation d'un cric dans un véhicule à moteur

(30) Priorität: 03.08.1991 DE 4125851
(43) Veröffentlichungstag der Anmeldung: 10.02.1993
(73) Patentinhaber: E.A. STORZ GMBH & CO. KG, D-78532 Tuttlingen (DE)
(72) Erfinder: Weisser, Dieter, W-7200 Tuttlingen (DE); Pfeiffer, Thomas, W-7201 Seitingen-Oberflacht (DE)
(74) Vertreter: Haecker, Walter

(56) Entgegenhaltungen:
- EP-A- 0 200 812
- EP-A- 0 232 836
- DE-A- 2 658 460
- DE-A- 3 510 616
- DE-A- 3 611 714
- GB-A- 2 053 846
- US-A- 3 831 892
- US-A- 4 111 344
- US-A- 4 586 696

## Beschreibung

Die Erfindung betrifft einen Wagenheber mit einer Vorrichtung zu seiner Befestigung in einem Kraftfahrzeug, insbesondere zur Befestigung am Ersatzrad eines Kraftfahrzeugs mittels einer durch die Nabenöffnung der Ersatzradfelge hindurchsteckbaren Befestigungsstange und eines von letzterer durchsetzten, längs der Befestigungsstange verlagerbaren und an dieser festlegbaren ersten Widerlagerelements zum Verspannen des Wagenhebers auf der Felge.

Eine besonders häufig anzutreffende Konstruktion umfaßt eine am Boden einer das Ersatzrad aufnehmenden Karosseriemulde befestigte Gewindestange, die durch eine Nabenöffnung der Ersatzradfelge hindurchragt. Der Wagenheber ist in einer von der nach oben weisenden Felgeninnenseite des Ersatzrads gebildeten Mulde derart angeordnet, daß mindestens eine seiner Blechwände, bei einem Einarm-Heber die Seitenwände seiner Standsäule, parallel zum Karosseriemuldenboden verläuft, und die Gewindestange erstreckt sich mit einem Gewindeabschnitt durch ein Loch in dieser Wagenheber-Blechwand hindurch, so daß von oben eine Mutter auf die Gewindestange aufgeschraubt und gegen die Wagenheber-Blechwand festgezogen werden kann. Auf diese Weise werden dann Ersatzrad und Wagenheber in der Karosseriemulde festgehalten. Diese bekannte Konstruktion setzt nicht nur die Befestigung der Gewindestange an der Karosserie voraus, z.B. durch Anschweißen, sondern sie erschwert auch das Herausnehmen des Ersatzrads, weil dieses nach dem Lösen der Mutter und dem Abnehmen des Wagenhebers über das Ende der Gewindestange hinweggehoben werden muß, was angesichts des erheblichen Gewichts eines Ersatzrads (hierunter sollen nicht die heute teilweise üblichen Noträder verstanden werden) einen beträchtlichen Kraftaufwand erfordert.

Bei einer anderen bekannten Konstruktion eines Scherenwagenhebers ist an diesem eine Halteplatte befestigt, welche zwei feste, dornartige Krallen und einen mittels einer Flügelmutter anziehbaren Dorn trägt, die in drei Befestigungsöffnungen einer Ersatzradfelge eingesetzt werden können, worauf durch Anziehen der mit dem beweglichen Dorn zusammenwirkenden Flügelmutter die beiden Krallen und der Dorn in den Felgenöffnungen verspannt werden. Abgesehen davon, daß diese bekannte Konstruktion einen recht aufwendigen, schweren und teuren Wagenheber zur Folge hat, führt sie auch zu dem Nachteil, daß durch die aus Stahl bestehenden Krallen und den stählernen Dorn ein Aluminiumrad sehr leicht beschädigt werden kann. Bezüglich dieser bekannten Konstruktion ist noch erwähnenswert, daß bei ihr das Ersatzrad über den an ihm befestigten Wagenheber an der Fahrzeugkarosserie gehalten wird: zu diesem Zweck hat die Flügelmutter, mit deren Hilfe der Wagenheber an der Ersatzradfelge verspannt wird, einen Querschlitz, durch den ein an der Karosserie verankertes, anziehbares Band hindurchgeführt wird, so daß durch dieses Band die aus Ersatzrad und Wagenheber bestehende Baugruppe an der Fahrzeugkarosserie gehalten wird.

Aus der US-A-4 111 344, was einen Wagenheber und eine Befestigungsvorrichtung nach dem Oberbegriff des Anspruchs 1 beschreibt, ergeben sich zwei Konstruktionen (siehe Sp.1, Zeilen 10 - 35 einerseits, sowie Zeichnungen und Sp. 1, Zeile 57 bis Spalte 2, Zeile 9 andererseits) der eingangs erwähnten Art. Bei der ersten dieser beiden bekannten Konstruktionen ist am Kofferraumboden der Fahrzeugkarosserie ein bügelförmiger Halter befestigt, an dem ein hakenförmig gekrümmter Endbereich einer Befestigungsstange eingehängt ist. Der andere Endbereich der Befestigungsstange ist mit einem Gewinde versehen. Zum Festlegen eines Ersatzrades und eines Wagenhebers auf dem Kofferraumboden wird die am bügelförmigen Halter eingehängte Befestigungsstange mit ihrem mit dem Gewinde versehenen Endbereich zunächst durch die Nabenöffnung der Ersatzradfelge und dann durch ein Loch eines Fußes des Wagenhebers hindurchgesteckt, worauf eine Mutter auf das Gewinde der Befestigungsstange aufgeschraubt und gegen den Wagenheber festgezogen wird, um so den letzteren und das Ersatzrad am Kofferraumboden zu verspannen. An dieser ersten bekannten Konstruktion wird es gemäß der US-A-4 111 344 als nachteilig empfunden, daß die Befestigungsstange nicht in einer aufrechten, zum Kofferraumboden senkrechten Position stehen bleibt, was das Aufstecken des Ersatzrades auf die Befestigungsstange erschwert, und daß sich bei der Handhabung dieser bekannten Befestigungsvorrichtung der hakenförmig gekrümmte Endbereich der Befestigungsstange vom bügelförmigen Halter lösen kann. Deshalb ist bei der zweiten, sich aus der US-A-4 111 344 ergebenden bekannten Konstruktion ein Federelement vorgesehen, durch das die Befestigungsstange zum einen senkrecht zum Kofferraumboden gehalten und zum anderen so in Richtung weg vom Kofferraumboden gezogen wird, daß sichergestellt ist, daß sich der hakenförmig gekrümmte Endbereich der Befestigungsstange nicht vom bügelförmigen Halter lösen kann. Beide Konstruktionen haben aber den Nachteil, daß das Ersatzrad, welches bekanntlich ein erhebliches Gewicht hat, über die aufrechtstehende Befestigungsstange hinweggehoben werden muß, um es dem Kofferraum des Kraftfahrzeugs entnehmen zu können.

Der Erfindung lag nun die Aufgabe zugrunde, einen Wagenheber mit einer Vorrichtung zu seiner Befestigung in einem Kraftfahrzeug zu schaffen, durch die sich die vorstehend erläuterten Nachteile vermeiden lassen.

Für Fahrzeuge, bei denen der Wagenheber auf dem Ersatzrad liegend im Kofferraum untergebracht werden soll, läßt sich diese Aufgabe mit einer Einrichtung nach Anspruch 1 lösen.

Abgesehen davon, daß bei der erfindungsgemäßen Einrichtung die Befestigungsvorrichtung nur aus einer einfachen Befestigungsstange und zwei einfach ausgebildeten Widerlagerelementen bestehen kann, läßt sich bei der erfindungsgemäßen Einrichtung die Befestigungsstange ganz einfach entfernen, indem wenigstens eines der Widerlagerelemente von der Befestigungsstange gelöst wird und Wagenheber sowie Befestigungsstange vom Ersatzrad abgenommen werden, worauf sich letzteres verhältnismäßig leicht z. B. aus dem Kofferraum eines Personenwagens herausheben läßt.

Das Grundprinzip der vorliegenden Erfindung eignet sich aber auch zum Befestigen eines Wagenhebers unmittelbar an der Fahrzeugkarosserie, wozu erfindungsgemäß eine Einrichtung gemäß Anspruch 2 vorgeschlagen wird. Bei dem Karosseriebereich, an dem die Befestigungsstange mittels eines Widerlagerelements angreift, kann es sich z. B. um einen in den Kofferraum eines Personenwagens hineinragenden Schweißnahtsteg handeln, es ist aber auch möglich, im Inneren des Kofferraums einen steifen Blechlappen, Winkel oder dergleichen an der eigentlichen Karosserie zu befestigen, z. B. anzuschweißen, um so das vom zweiten Widerlagerelement der Befestigungsvorrichtung zu hintergreifende Karosserieteil zu bilden.

Bei Ausführungsformen, bei denen der Wagenheber am Ersatzrad befestigt wird, ist es besonders vorteilhaft, wenn ein an der Befestigungsstange befestigter oder festlegbarer Griff, welcher ein Widerlager für den Wagenheber bilden kann, mit einer sich ungefähr senkrecht zur Achse der Befestigungsstange erstreckenden, schlitzförmigen Öffnung zum Hindurchführen eines an der Karosserie verankerbaren Bandes versehen ist, um so, wie an sich bekannt, das Ersatzrad über den Wagenheber festzulegen.

Weitere Merkmale vorteilhafter Ausführungsformen der Erfindung ergeben sich aus den Ansprüchen 3 bis 17 sowie 20 und 21.

Im folgenden sollen einige besonders vorteilhafte Ausführungsformen der erfindungsgemäßen Einrichtung anhand der beigefügten Zeichnung näher erläutert werden, und zwar anhand eines sogenannten Einarm-Wagenhebers, obwohl sich die Erfindung auch für andere Wagenhebertypen, wie z. B. sogenannte Scherenheber, eignet. In der Zeichnung zeigen:
- Fig. 1: den Wagenheber in der Seitenansicht mit einer ersten besonders vorteilhaften Ausführungsform der erfindungsgemäßen Befestigungsvorrichtung, die eine durch den Wagenheber hindurchgesteckte Gewindestange und eine auf letztere aufgeschraubte Flügelmutter umfaßt;
- Fig. 2: eine Draufsicht auf diesen Wagenheber, gesehen in Richtung des Pfeils "A" in Fig. 1;
- Fig. 3: einen Ausschnitt aus einem Schnitt entsprechend der Linie 3-3 in Fig. 2;
- Fig. 4: einen Schnitt durch eine Stahlfelge eines Ersatzrads, wobei in die von der Felgeninnenseite gebildete Mulde ein Wagenheber eingesetzt und dort mit Hilfe der Befestigungsvorrichtung nach den Figuren 1 - 3 festgelegt wurde und die Schnittebene senkrecht zur Radebene und in der Radachse verläuft;
- Fig. 5: eine Draufsicht, gesehen in Richtung des Pfeils "B" in Fig. 4, auf das in der Mulde eines Kofferraumbodens liegende Ersatzrad samt Wagenheber, Befestigungsvorrichtung und Befestigungsband;
- Fig. 6: eine erste Seitenansicht der in Fig. 2 dargestellten Gewindestange samt Flügelmutter;
- Fig. 7: eine zweite Seitenansicht der in Fig. 6 gezeigten Teile, nachdem diese um 90° um die Gewindestangenachse gedreht wurden;
- Fig. 8: eine der Fig. 2 entsprechende Darstellung der zweiten besonders vorteilhaften Ausführungsform der erfindungsgemäßen Befestigungsvorrichtung;
- Fig. 9: diejenigen Teile der in Fig. 8 dargestellten Befestigungsvorrichtung, welche von dem von einem Griff der Gewindestange abgewandten Stangenende getragen werden, und zwar in einem Axialschnitt entsprechend der Linie 9-9 aus Fig. 10;
- Fig. 10: eine Draufsicht auf die in Fig. 9 gezeigten Teile;
- Fig. 11: die in den Figuren 9 und 10 gezeigten Teile, nachdem sie in die Nabenöffnung einer gegossenen oder geschmiedeten Leichtmetallfelge eingesetzt wurden und die Befestigungsvorrichtung angezogen wurde;
- Fig. 12: eine der Fig. 11 entsprechende Darstellung, jedoch mit einer Stahlfelge;
- Fig. 13: eine der Fig. 11 entsprechende Darstellung mit dem ersten und zweiten Widerlagerelement einer dritten Ausführungsform der erfindungsgemäßen Befestigungsvorrichtung, jedoch ohne die anderen Teile dieser Befestigungsvorrichtung;
- Fig. 14A: einen Axialschnitt durch das erste und zweite Widerlagerelement einer vierten Ausführungsform der erfindungsgemäßen Befestigungsvorrichtung, welche ähnlich der dritten Ausführungsform ausgebildet ist;
- Fig. 14B: eine Draufsicht auf die in Fig. 14A dargestellten Teile;
- Fig. 15A: einen Axialschnitt durch eine Befestigungsstange und das erste Widerlagerelement einer fünften Ausführungsform;
- Fig. 15B: eine Ansicht der in Fig. 15A dargestellten Teile, gesehen in Längsrichtung der in Fig. 15B im Schnitt gezeigten Befestigungsstange, und
- Fig. 15C: eine Seitenansicht der Befestigungsstange und des ersten Widerlagerelements der fünften Ausführungsform, wobei noch eine mit einem Loch versehene Seitenwand eines Wagenhebers angedeutet wurde, durch deren Loch die Befestigungsstange hindurchgesteckt ist.

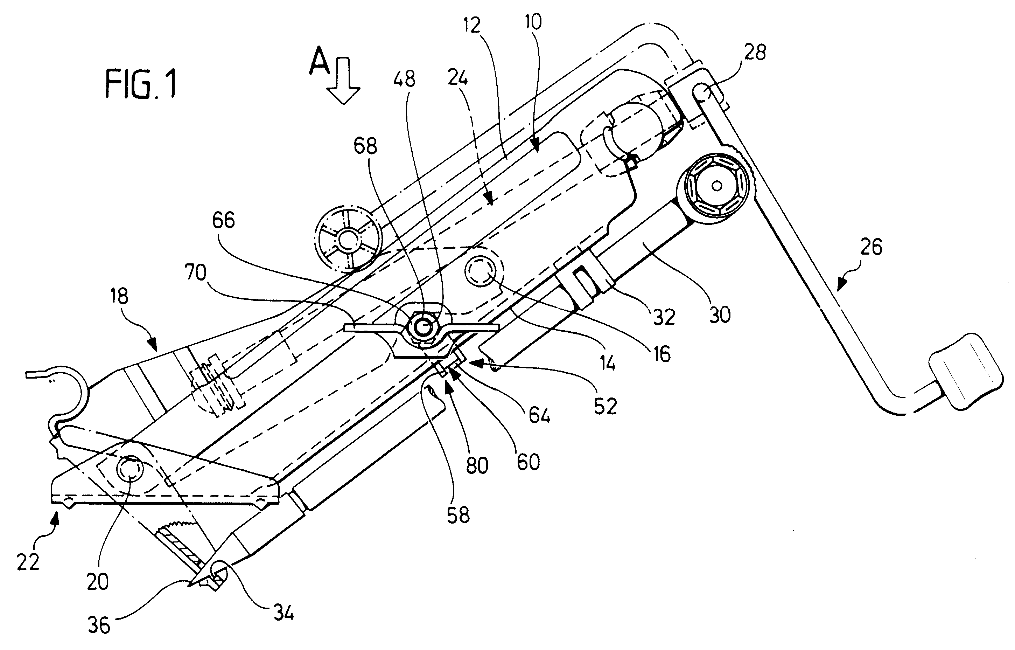

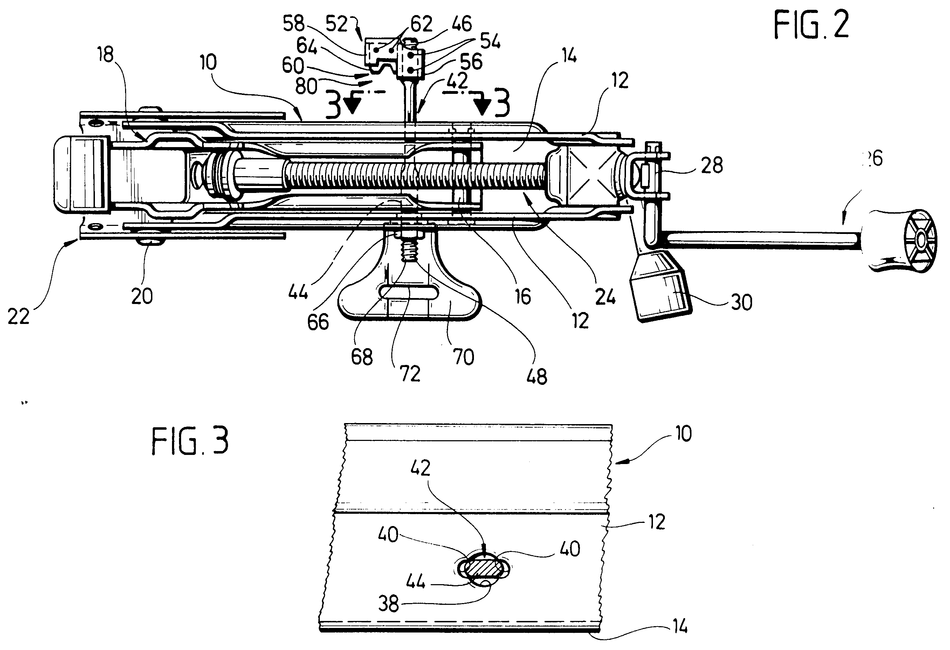

Die Figuren 1 und 2 zeigen einen Einarm-Scherenheber mit einer Trag- oder Standsäule 10, welche einen U-förmigen Querschnitt mit zwei Seitenwänden 12 und einem Rücken 14 besitzt, einem an der Standsäule 10 um eine Schwenkachse 16 schwenkbar angebrachten Tragarm 18, einer an der Standsäule 10 um eine Schwenkachse 20 schwenkbar angebrachten Fußplatte 22, einer Gewindespindel 24 zum Schwenken des Tragarms 18 bezüglich der Standsäule 10 und mit einer Handkurbel 26, welche um eine Achse 28 schwenkbar, jedoch unlösbar mit der Gewindespindel 24 verbunden ist. Ein derartiger Wagenheber ist bekannt, so daß sein Aufbau und seine Funktion nicht weiter beschrieben zu werden brauchen; es sei nur noch erwähnt, daß die Figur 1 strichpunktiert die Handkurbel 26 in derjenigen Stellung zeigt, die sie einnimmt, wenn der Wagenheber im Fahrzeug weggestaut wird.

Im folgenden soll die Konstruktion nun beschrieben werden, soweit sie gemäß vorliegender Erfindung ausgebildet ist.

Danach ist der Wagenheber mit einer Halterung für einen Radmutterschlüssel 30 versehen, welche aus einer am Standsäulenrücken 14 befestigten Klammer oder Bügel 32 und einem Loch 34 in der Fußplatte 22 zum Einstecken eines dornförmigen Endes 36 des Radmutterschlüssels 30 besteht.

Erfindungsgemäß sind die beiden Standsäulenwände 12 in Bereichen, zwischen die der Tragarm 18 auch in demjenigen Zustand des Wagenhebers, in dem dieser weggestaut wird, nicht eintaucht, mit jeweils einem Loch zum Durchstecken einer Gewindestange der erfindungsgemäßen Befestigungsvorrichtung versehen, und mindestens eines dieser Löcher weist eine von der Kreisform abweichende Gestalt auf, um ein Verdrehen der Gewindestange gegenüber dem Wagenheber zu verhindern. Die Figur 3 zeigt ein solches erfindungsgemäß gestaltetes Loch 38 in der in Figur 2 oberen Standsäulenseitenwand 12; dieses Loch 38 hat die Form eines Kreises mit zwei einander gegenüberliegenden Auswölbungen 40. Hingegen soll bei der dargestellten bevorzugten Ausführungsform des erfindungsgemäßen Wagenhebers das dem Loch 38 gegenüberliegende Loch in der gemäß Figur 2 unteren Standsäulenseitenwand 12 kreisförmig sein.

Durch diese beiden Löcher läßt sich eine Gewindestange 42 hindurchstecken, welche, wie die Figur 2 erkennen läßt, erfindungsgemäß aus einem Mittelabschnitt 44, einem Befestigungsabschnitt 46 am einen Ende der Gewindestange 42 und einem Gewindeabschnitt 48 am anderen Ende der Gewindestange besteht. Der Mittelabschnitt 44 hat entweder einen kreisrunden Querschnitt mit einer angeprägten oder angepreßten Längsrippe oder, wie in Figur 3 dargestellt, einen flachen Querschnitt, so daß er in die Auswölbungen 40 des Lochs 38 hineinragt. Am Befestigungsabschnitt 46 ist ein Blechbügel 52 beispielsweise mittels Schweißpunkten 54 befestigt; er umfaßt mit seinem Rücken 56 den Befestigungsabschnitt 46 und nimmt zwischen seinen Schenkeln 58 ein flaches Kunststoffteil 60 auf, welches mit den Blechbügelschenkeln 58 z.B. über durchgehende Niete 62 verbunden ist.

Erfindungsgemäß überragt das Kunststoffteil 60 den Blechbügel 52 in Richtung auf den Gewindeabschnitt 48 der Gewindestange 42; ferner besitzt das Kunststoffteil 60 erfindungsgemäß eine Nase 64 und ist so hakenförmig ausgebildet.

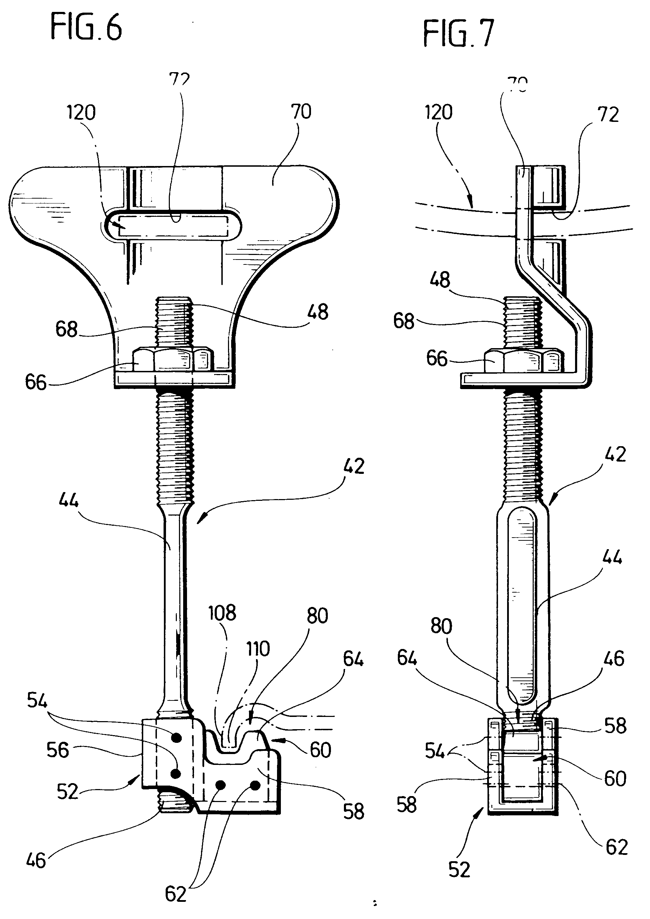

Zur erfindungsgemäßen Befestigungsvorrichtung gehört des weiteren eine Mutter 66, welche auf ein Außengewinde 68 des Gewindeabschnitts 48 aufschraubbar ist. Damit für die Mutter 66 ein billiges, käufliches Teil verwendet werden kann, ist an ihr ein durch Stanzen und Prägen hergestellter, flacher Knebelgriff 70, insbesondere durch Schweißen, befestigt, welcher nach einem weiteren Merkmal der Erfindung mit einem Querschlitz 72 versehen ist. Wie die Gewindestange, der Knebelgriff 70 und der in Figur 2 als Ganzes mit 80 bezeichnete, hakenförmige Vorsprung der Gewindestange 42 im einzelnen weiter gestaltet werden können, lassen die Figuren 6 und 7 erkennen.

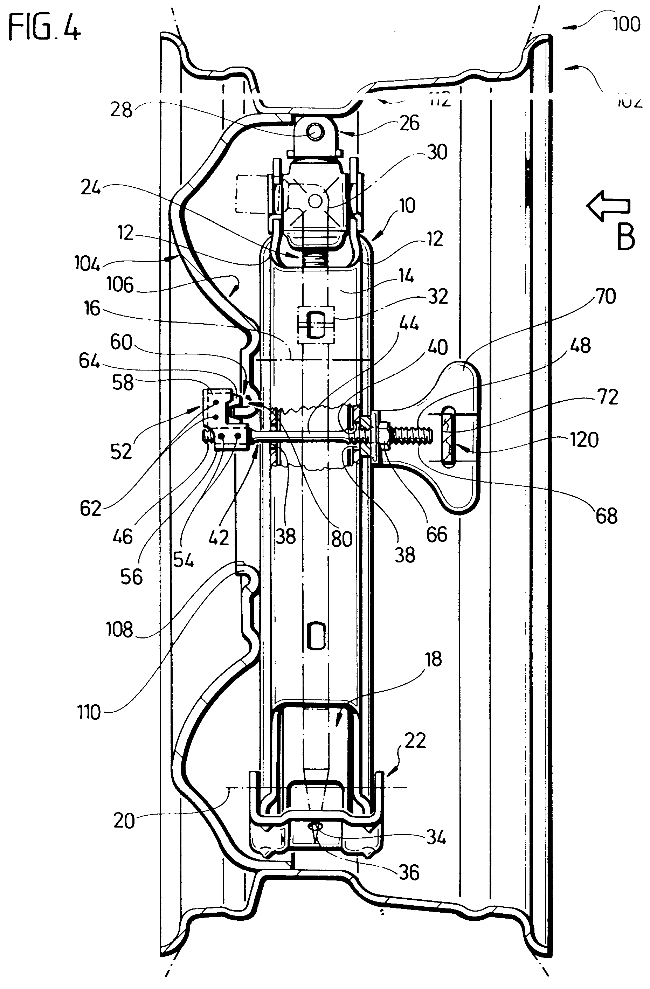

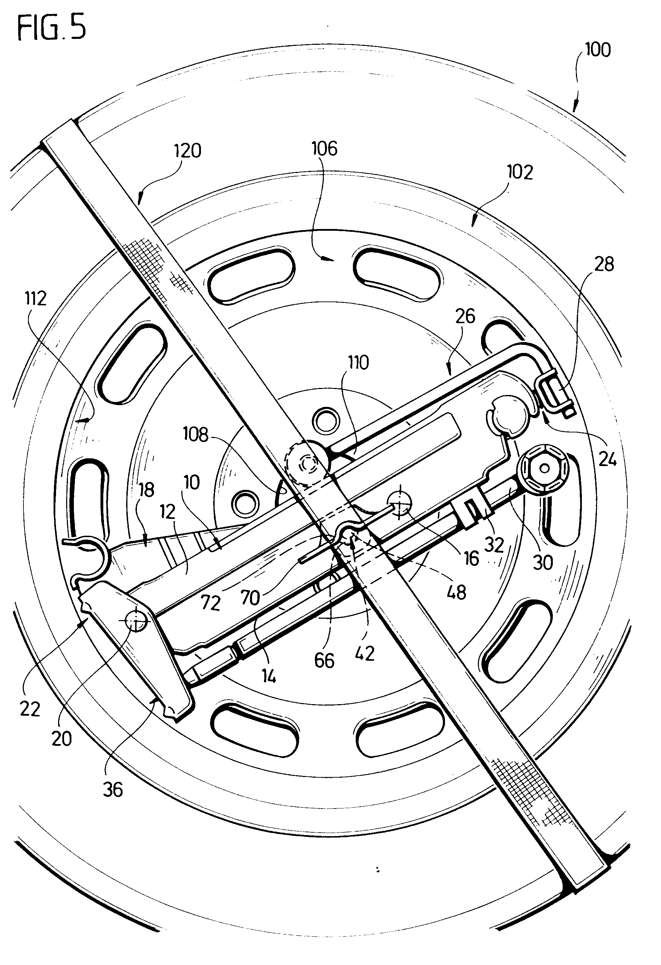

Die Figuren 4 und 5 zeigen nun, wie der Wagenheber mit Hilfe der erfindungsgemäßen Befestigungsvorrichtung in der Felge eines Ersatzrads befestigt und Ersatzrad samt Wagenheber, z.B. am Boden oder einer Seitenwand eines Kofferraums eines PKW, befestigt werden.

Das als Ganzes mit 100 bezeichnete Ersatzrad hat eine Felge 102, deren Außenseite mit 104 und deren Innenseite mit 106 bezeichnet wurden. Sie hat eine Nabenöffnung 108, an die sich auf der Felgenaußenseite 104 ein Kragen 110 anschließt. Das Ersatzrad hat also eine bekannte Form und ist nicht etwa erfindungsgemäß an die Befestigungsvorrichtung angepaßt. Hingegen sind erfindungsgemäß die Löcher in den Standsäulenseitenwänden 12 des Wagenhebers, d.h. das Loch 38 und das nicht dargestellte Loch in der gegenüberliegenden Standsäulenseitenwand 12, so angeordnet, daß wenn der Wagenheber in der von der Felge 102 gebildeten Mulde 112 liegt, der hakenförmige Vorsprung 80 der Gewindestange 42 den Kragen 110 unterund hintergreift, so wie dies die Figur 4 erkennen läßt. Wird also die Mutter 66 mit dem Knebelgriff 70 gegen die benachbarte Standsäulenseitenwand 12 des Wagenhebers angezogen, wird der hakenförmige Vorsprung 80 gegen den Kragen 110 gezogen und so der Wagenheber an der Felge 102 verspannt. Nachzutragen bleibt noch, daß die Figur 4 den hakenförmigen Vorsprung 80 um 90° verdreht darstellt.

Die Figur 5 läßt nun noch ein Halteband 120 erkennen, dessen Enden an der Fahrzeugkarosserie befestigt sind, das durch den Querschlitz 72 des Knebelgriffs 70 hindurchgeführt ist und z.B. aus zwei Teilen besteht, welche mittels eines Verschlusses aneinander befestigt und im Sinne einer Verkürzung des gesamten Haltebands 120 gegeneinander festgezogen werden können, um so das Ersatzrad 100 samt Wagenheber an der Karosserie festzulegen.

Es liegt auf der Hand, daß eine der Nabenöffnung 108 entsprechende Öffnung mit einem dem Kragen 110 entsprechenden Kragen auch in einem Karosserieteil ausgebildet werden kann, bei dem es sich um ein vorstehend bereits erläutertes Karosserieteil handelt.

Wie sich aus dem vorstehenden ergibt, ist es einer der Grundgedanken der vorliegenden Erfindung, eine Befestigungsvorrichtung mit einer Gewindestange und einer Mutter mit einem Element oder einer Baueinheit zu versehen, welche in die Nabenöffnung einer Ersatzradfelge eingreift und durch Anziehen der Mutter in dieser Nabenöffnung verspannbar ist.

Bei der Ausführungsform nach den Figuren 1 - 7 bildet also die Mutter 66 das erste Widerlagerelement und der Haken 80 das zweite Widerlagerelement im Sinne der beigefügten Ansprüche, wobei die Fig. 6 erkennen läßt, daß auch die aus Mutter 66 und Knebelgriff 70 bestehende Baueinheit als erstes Widerlagerelement angesehen werden kann.

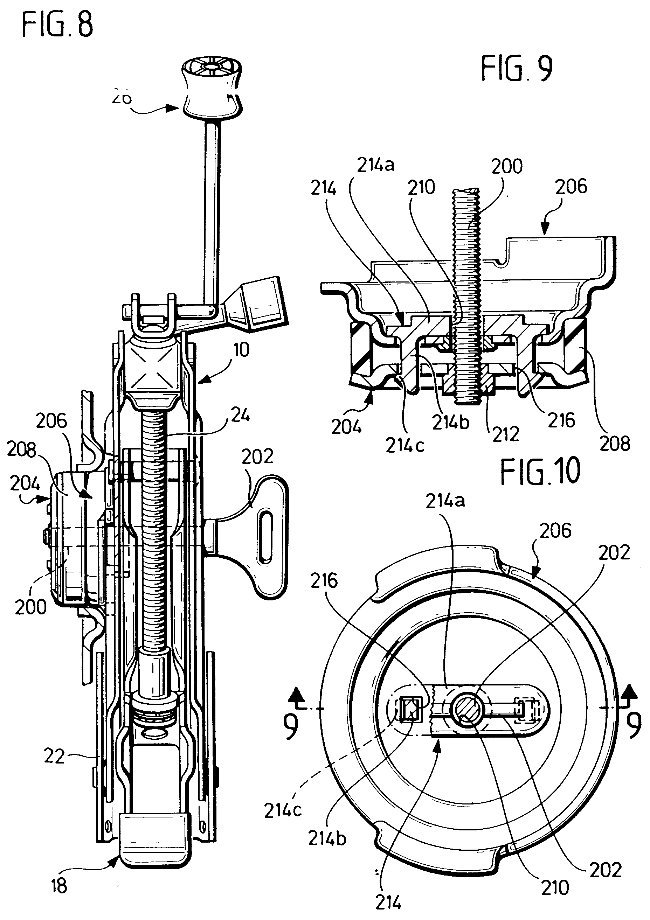

Im folgenden soll nun anhand der Figuren 8 - 12 die zweite besonders vorteilhafte Ausführungsform erläutert werden, wobei von der Beschreibung des in Fig. 8 dargestellten Wagenhebers im Hinblick auf die vorstehende Beschreibung der Figuren 1 und 2 abgesehen werden soll; es sei nur darauf hingewiesen, daß auch bei dieser zweiten Ausführungsform die beiden Seitenwände der Standsäule des Wagenhebers mit Löchern zum Durchstecken der Gewindestange der zweiten Ausführungsform der erfindungsgemäßen Befestigungsvorrichtung versehen sind.

Diese zweite Befestigungsvorrichtung besitzt wiederum eine Gewindestange 200, an der jedoch ein Knebelgriff 202 fest angebracht ist. Das erste und zweite Widerlager im Sinne der beigefügten Ansprüche wird von einer insbesondere in den Figuren 9 und 10 dargestellten Baugruppe gebildet, welche einen ersten Spannteller 204, einen zweiten Spannteller 206 und ein ringförmiges, gummielastisches Kunststoff-Abstützelement 208 aufweist, welches zwischen den beiden Spanntellern angeordnet ist und zwischen diesen in Längsrichtung der Gewindestange 200 eingespannt werden kann. Zu diesem Zweck hat der zweite Spannteller 206 eine glattwandige Öffnung 210, in der die Gewindestange 200 gleiten kann, während im ersten Spannteller 204 eine Mutter 212 befestigt ist, in die sich die Gewindestange 200 einschrauben läßt. Erfindungsgemäß sind die beiden Spannteller 204, 206 so gestaltet, daß sie, wie dies die Fig. 9 deutlich erkennen läßt, das ringförmige Abstützelement 208 formschlüssig halten, so daß es nicht aus dem Bereich der beiden Spannteller herausgequetscht werden kann, wenn diese in Längsrichtung der Gewindestange 200 gegeneinander gezogen werden.

Erfindungsgemäß werden die Spannteller 204, 206, bei denen es sich um metallische oder Kunststoff-Teile handeln kann, durch ein Rastelement 214 so zusammengehalten, daß sie das Abstützelement 208 zumindest im wesentlichen spannungsfrei zwischen sich aufnehmen können. Bei der dargestellten Ausführungsform hat dieses Rastelement 214 die Gestalt eines U-förmigen Bügels mit einem Querjoch 214a und zwei Schenkeln 214b, wobei an die freien Enden der Schenkel 214b Widerhaken 214c angeformt sind. Zweckmäßigerweise handelt es sich bei dem Rastelement 214 um ein elastisches Kunststoffelement. Für den Durchtritt der Schenkel 214b haben die beiden Spannteller 204, 206 jeweils zwei Öffnungen 216, wobei diese Öffnungen des ersten Spanntellers 204 so ausgebildet sind, daß sich die Widerhaken 214c durch diese Öffnungen gemäß Fig. 9 von oben hindurchdrücken lassen, sich das Rastelement 214 jedoch zumindest nicht mehr ohne weiteres aus den Spanntellern herausziehen läßt.

Die gemäß Fig. 9 obere Kante des zweiten Spanntellers 206 ist so gestaltet, daß sie an eine aus Fig. 8 erkennbare Profilierung der gemäß Fig. 8 linken Seitenwand der Standsäule des Wagenhebers angepaßt ist, um auf diese Weise zu erreichen, daß sich beim Drehen am Knebelgriff 202 der Spannteller 206 und dank des Rastelements 214 damit auch der Spannteller 204 nicht verdrehen kann.

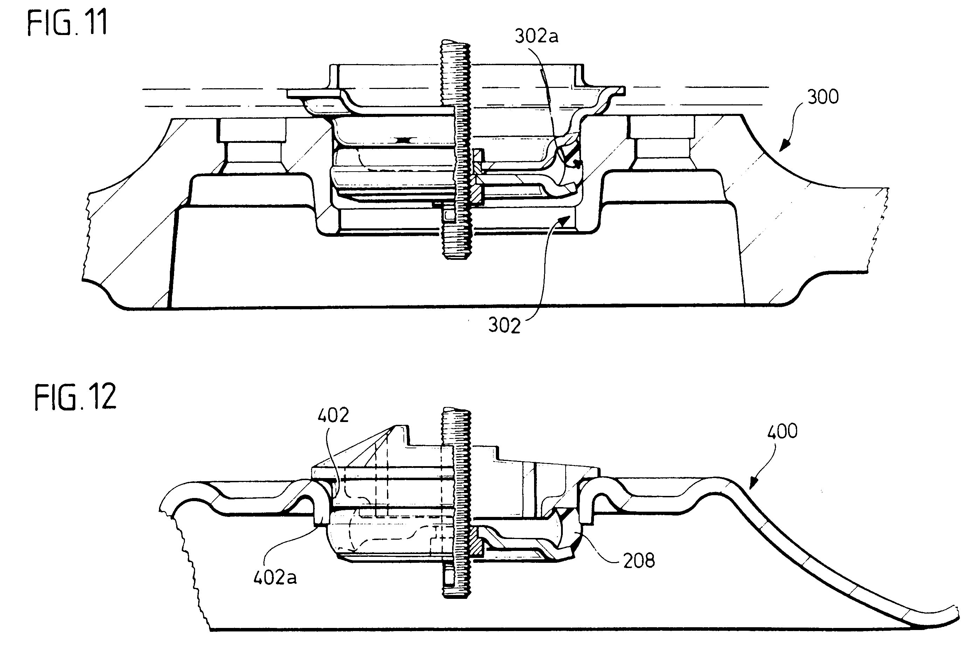

Bei dieser zweiten Ausführungsform bildet der Knebelgriff 202 erfindungsgemäß ein Widerlager für die gemäß Fig. 8 rechte Seitenwand der Standsäule des Wagenhebers, und da der zweite Spannteller 206 durch die gemäß Fig. 8 linke Seitenwand der Standsäule des Wagenhebers abgestützt wird, läßt sich durch Drehen des Knebelgriffs 202 der erste Spannteller 204 gegen den Spannteller 206 anziehen und damit das Abstützelement 208 zwischen den beiden Spanntellern einspannen. Was hierdurch erreicht wird, soll nun anhand der Figuren 11 und 12 erläutert werden.

Die in Fig. 11 dargestellte Leichtmetallfelge 300 hat eine Nabenöffnung 302, deren innere Wandung eine Schulter 302a bildet, wobei die erfindungsgemäße Befestigungsvorrichtung derart an die Gestalt der Felge angepaßt ist, daß sich das Abstützelement 208 im Bereich der Schulter 302a befindet, wenn der mit der Befestigungsvorrichtung versehene und in Fig. 8 dargestellte Wagenheber auf die Felge aufgelegt und die von den beiden Spanntellern 204 und 206 sowie dem Abstützelement 208 gebildete Baugruppe in die Nabenöffnung 302 eingeschoben wird - letzteres erfolgt natürlich mit noch spannungsfreiem Abstützelement 208. Dreht man dann am Knebelgriff 202 und verspannt so das Abstützelement 208 zwischen den Spanntellern 204 und 206, wird das Abstiltzelement 208 so zusammengequetscht, daß sich sein Außendurchmesser vergrößert, so daß das Abstützelement in der Nabenöffnung 302 verspannt wird und insbesondere im Zusammenwirken mit der Schulter 302a verhindert, daß die erfindungsgemäße Befestigungsvorrichtung wieder aus der Nabenöffnung 302 herausgezogen werden kann. Erfindungsgemäß ist also im spannungsfreien Zustand der Außendurchmesser des Abstützelements 208 ebenso wie der Außendurchmesser des ersten Spanntellers 204 und der Außendurchmesser derjenigen Teile des zweiten Spanntellers 206, welche in die Nabenöffnung 302 eingreifen, kleiner als der Durchmesser der Nabenöffnung 302 (jedenfalls in denjenigen Bereichen der Nabenöffnung, in die die Befestigungsvorrichtung eingeschoben wird), während sich durch Einspannen des Abstützelements 208 dessen Außendurchmesser so vergrößern läßt, daß das Abstützelement 208 in der Nabenöffnung verspannt wird.

Auch bei dieser Ausführungsform läßt sich die Gewindestange 200 ohne weiteres entfernen, indem sie aus der Mutter 212 herausgeschraubt und abgezogen wird, worauf sich nicht nur der Wagenheber, sondern erforderlichenfalls auch das Ersatzrad problemlos einem Kofferraum oder dergleichen entnehmen läßt. Man kann aber auch so vorgehen, daß man durch Drehen der Gewindestange das Abstützelement 208 entspannt und dann die gesamte Befestigungsvorrichtung vom Ersatzrad abzieht.

Die Fig. 12 entspricht der Fig. 11, jedoch zeigt sie eine Stahlfelge 400, deren Nabenöffnung 402 mit einem Kragen 402a versehen ist, welcher von dem verspannten Abstützelement 208 hintergriffen wird.

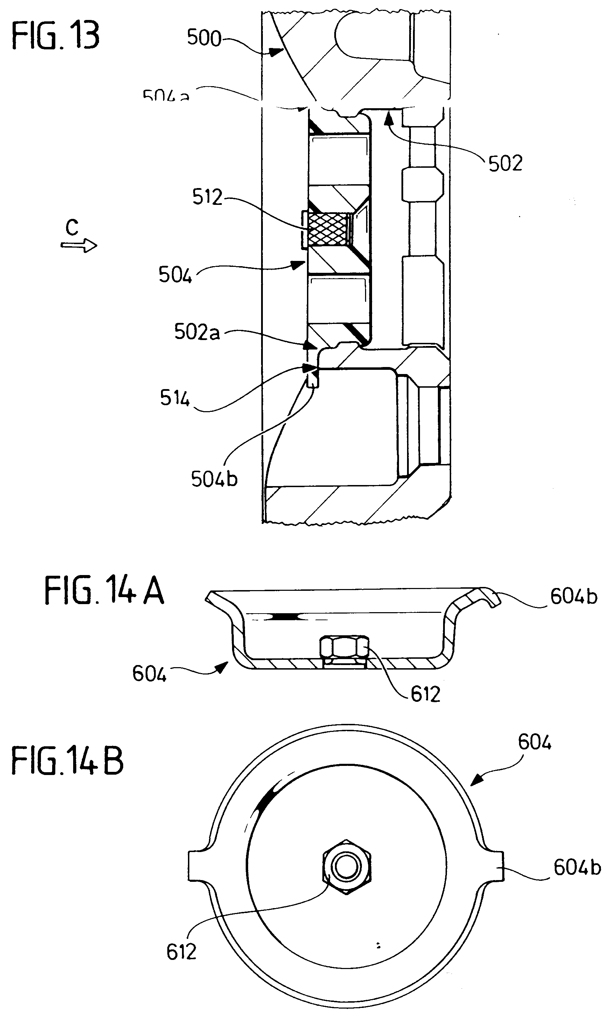

Die Fig. 13 zeigt einen Teil einer dritten Ausführungsform der erfindungsgemäßen Befestigungsvorrichtung, welche insofern ähnlich der zweiten Ausführungsform nach den Figuren 8 - 12 ist, als ein tellerförmiges Element in die Nabenöffnung einer Felge eingesetzt wird und ein Muttergewinde für eine Gewindestange enthält, so daß sich das tellerförmige Element gegen eine von der Nabenöffnung gebildete Schulter verspannen läßt. Das in Fig. 13 dargestellte tellerförmige Element tritt also an die Stelle der Teile 204, 206, 208 und 212 der zweiten Ausführungsform.

Die Fig. 13 zeigt wieder einen Teil einer gegossenen oder geschmiedeten Leichtmetallfelge 500 mit einer Nabenöffnung 502, welche bei 502a eine Schulter für einen Widerlagerteller 504 bildet. Bei diesem handelt es sich um ein Kunststoffteil, in welchem eine Mutter 512 für eine nicht dargestellte Gewindestange befestigt ist (bei letzterer kann es sich um die mit einem Knebelgriff 202 versehene Gewindestange 200 der zweiten Ausführungsform handeln). Erfindungsgemäß sind die Wand der Nabenöffnung 502 und die Umfangsfläche des Widerlagertellers 504 so profiliert (siehe Fig. 13), daß sich der Widerlagerteller beim Einsetzen in die Nabenöffnung 502 in Richtung des Pfeils C in der Nabenöffnung verrasten läßt, so daß der Widerlagerteller nicht mehr aus der Nabenöffnung herausfallen kann. Nach einem weiteren Merkmal der Erfindung ist der Widerlagerteller 504 mit einem Ringbund 504a versehen, welcher verhindert, daß sich der Widerlagerteller in Richtung des Pfeils C durch die Nabenöffnung 502 hindurchziehen bzw. hindurchdrücken läßt, wenn die Gewindestange gedreht und damit der Widerlagerteller 504 gegen die Felge 500 gezogen wird. Schließlich sind erfindungsgemäß Mittel vorgesehen, welche verhindern, daß sich beim Drehen der Gewindestange der Widerlagerteller 504 gegenüber der Felge 500 dreht: Im Bereich des Ringbunds 504a ist an den Widerlagerteller 504 wenigstens ein Vorsprung 504b angeformt, welcher formschlüssig in eine entsprechende Aussparung 514 der Felge 500 eingreift.

In den Figuren 14A und 14B ist eine abgewandelte Ausführungsform eines Widerlagertellers 604 dargestellt, welcher an die Stelle des Widerlagertellers 504 der dritten Ausführungsform tritt und für eine Stahlfelge vorgesehen ist. Deshalb handelt es sich bei dem Widerlagerteller 604 um ein Stanz-Tiefzieh-Teil aus Stahlblech, an dem im Bereich eines zentralen Lochs eine Mutter 612 angeschweißt ist. Der Widerlagerteller 604 ist wieder mit Vorsprüngen 604b versehen, welche dieselbe Funktion übernehmen wie der in Fig. 13 dargestellte Vorsprung 504b.

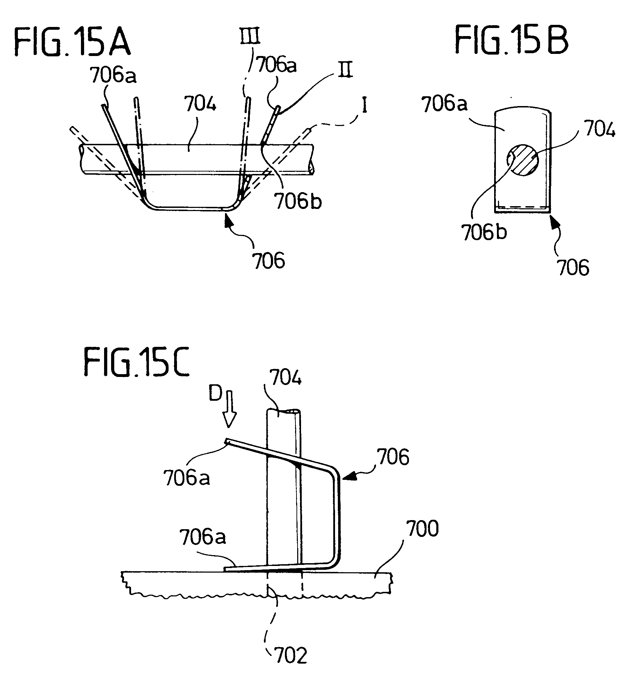

Die Figuren 15A, 15B und 15C lassen schließlich erkennen, daß es sich bei der Befestigungsstange der erfindungsgemäßen Befestigungsvorrichtung nicht um eine Gewindestange und bei dem ersten Widerlagerelement nicht um eine Mutter handeln muß. Die Figuren 15A - 15C zeigen eine Seitenwand 700 der Standsäule eines Wagenhebers, welche ein Loch 702 zum Durchstecken einer Befestigungsstange 704 der erfindungsgemäßen Befestigungsvorrichtung aufweist. Bei dieser Befestigungsstange handelt es sich um eine glatte Stange, welche einen kreisrunden Querschnitt haben kann. Außerdem besitzt diese Ausführungsform der erfindungsgemäßen Befestigungsvorrichtung ein erstes Widerlagerelement in Form eines Stahlfederbügels 706, der die Gestalt eines U mit zwei Schenkeln 706a aufweist, deren jeder ein an die Querschnittsform der Befestigungsstange 704 angepaßtes Loch 706b besitzt, um den Stahlfederbügel auf die Befestigungsstange 704 aufschieben zu können.

Die Fig. 15A zeigt drei verschiedene Zustände des Stahlfederbügels, welche mit I, II und III bezeichnet wurden. Der Zustand I ist derjenige Zustand, den der Stahlfederbügel 706 einnimmt, wenn er nicht auf die Befestigungsstange 704 aufgeschoben ist und wenn er außerdem spannungsfrei ist. Im Zustand III, der sich dadurch herbeiführen läßt, daß man die beiden Schenkel 706a zwischen zwei Fingern hält und sie gegeneinander drückt, läßt sich der Stahlfederbügel 706 auf der Befestigungsstange 704 verschieben. Läßt man dann die Schenkel 706a los, geht der Stahlfederbügel in den Zustand II über, an dem sich die Ränder seiner Löcher 706b an der Befestigungsstange 704 verkanten, so daß sich der Stahlfederbügel auf der Befestigungsstange nicht mehr verschieben läßt.

Bei dieser in den Figuren 15A - 15C dargestellten Ausführungsform wird die Befestigungsstange 704 beispielsweise von Hand in eine solche Position gebracht, daß z. B. ein an ihr angebrachter, nicht dargestellter Haken einen Kragen einer Nabenöffnung hintergreift, so wie dies beispielsweise in Fig. 4 dargestellt ist, worauf der Stahlfederbügel 706 gegen den Wagenheber gepreßt wird (siehe Pfeil D in Fig. 15C); läßt man dann den Stahlfederbügel los, blockiert er an der Befestigungsstange 704, so daß der Wagenheber an der Felge festgelegt ist. Entsprechendes gilt natürlich für eine Befestigung eines Wagenhebers an einem Karosserieteil.

## Patentansprüche

1. Wagenheber (10) mit einer Vorrichtung (42, 66, 70, 80; 200, 202, 204, 206, 208) zu seiner Befestigung in einem Kraftfahrzeug, mit einer durch mindestens ein am Wagenheber vorgesehenes Loch (38; 702) sowie durch eine Nabenöffnung (108; 302; 402; 502) der Felge (102; 300; 400; 500) eines Ersatzrades (100) hindurchsteckbaren Befestigungsstange (42; 200; 704), einem von letzterer durchsetzten, längs der Befestigungsstange verlagerbaren und an dieser festlegbaren ersten Widerlagerelement (66, 70; 204; 512; 706) zum Verspannen des Wagenhebers an der Ersatzradfelge sowie einem an dem durch die Nabenöffnung hindurchsteckbaren Endbereich (46) der Befestigungsstange vorgesehenen zweiten Widerlagerelement (52, 60, 80; 208; 504a), **dadurch gekennzeichnet**, daß das zweite Widerlagerelement (52, 60, 80; 208; 504a) zum Hintergreifen einer vom Nabenöffnungsrand gebildeten Schulter (110; 302a; 402a; 502a) gestaltet und die Befestigungsvorrichtung (42, 66, 70, 80; 200, 202, 204, 206, 208) so ausgebildet ist, daß nach dem Lösen des ersten Widerlagerelements (66, 70; 204; 512; 706) und damit der Verspannung der Wagenheber (10) samt Befestigungsstange (42; 200; 704) vom Ersatzrad (100; 300; 400; 500) abhebbar ist.

2. Wagenheber mit einer Vorrichtung zu seiner Befestigung an der Karosserie eines Kraftfahrzeugs, mit einer durch mindestens ein am Wagenheber vorgesehenes Loch hindurchsteckbaren Befestigungsstange, einem von letzterer durchsetzten, längs der Befestigungsstange verlagerbaren und an dieser festlegbaren ersten Widerlagerelement zum Verspannen des Wagenhebers sowie einem an dem der Karosserie zugewandten Endbereich der Befestigungsstange vorgesehenen zweiten Widerlagerelement zum Verankern an einem Karosseriebereich, **dadurch gekennzeichnet**, daß das zweite Widerlagerelement zum Hintergreifen einer von einem Rand des Karosseriebereichs gebildeten Schulter gestaltet und die Befestigungsvorrichtung so ausgebildet ist, daß nach dem Lösen des ersten Widerlagerelements und damit der Verspannung der Wagenheber samt Befestigungsstange von der Karosserie abhebbar ist.

3. Einrichtung nach Anspruch 2, dadurch gekennzeichnet, daß das zweite Widerlagerelement zum Hintergreifen einer vom Rand einer von der Befestigungsstange durchsetzten Öffnung des Karosseriebereichs gebildeten Schulter ausgebildet ist.

4. Einrichtung nach Anspruch 1, dadurch gekennzeichnet, daß die Befestigungsstange (42) einen das zweite Widerlagerelement bildenden Vorsprung (80) zum Hintergreifen des Randes (110) der Nabenöffnung (108) trägt.

5. Einrichtung nach Anspruch 4 für eine Felge (102), deren Nabenöffnung (108) auf der Felgenaußenseite (104) mit einem Kragen (110) versehen ist, dadurch gekennzeichnet, daß der Vorsprung als Haken (80) zum Hintergreifen des Felgenkragens (110) ausgebildet ist.

6. Einrichtung nach Anspruch 2 oder 3, dadurch gekennzeichnet, daß die Befestigungsstange einen das zweite Widerlagerelement bildenden Vorsprung zum Hintergreifen eines Randes des Karosseriebereichs trägt.

7. Einrichtung nach den Ansprüchen 3 und 6, dadurch gekennzeichnet, daß der Vorsprung als Haken zum Hintergreifen eines an der Öffnung des Karosseriebereichs vorgesehenen Kragens ausgebildet ist.

8. Einrichtung nach Anspruch 4 oder 6, dadurch gekennzeichnet, daß die gegen den besagten Rand (110) anliegende Kante des Vorsprungs (80) von einem Kunststoffteil (60) gebildet wird.

9. Einrichtung nach Anspruch 8, dadurch gekennzeichnet, daß an dem den Vorsprung (80) tragenden Endbereich (46) der Befestigungsstange (42) ein Blechbügel (52) befestigt ist, welcher - in Längsrichtung der Befestigungsstange (42) gesehen - ungefähr die Form eines flachen U besitzt, mit seinem Rücken (56) die Befestigungsstange (42) umfaßt und zwischen seinen Schenkeln (58) das Kunststoffteil (60) hält.

10. Einrichtung nach Anspruch 1 oder 3, dadurch gekennzeichnet, daß das zweite Widerlagerelement (504) als auf der vom Wagenheber abgewandten Seite der die Schulter bildenden Öffnung (502) anzuordnendes scheibenförmiges Element ausgebildet ist, dessen maximaler Durchmesser größer als der kleinste Öffnungsdurchmesser ist.

11. Einrichtung nach Anspruch 1 oder 3, dadurch gekennzeichnet, daß das zweite Widerlagerelement ein zwischen zwei Spanntellern (204, 206) angeordnetes, ringförmiges und elastisches Abstützelement (208) aufweist, wobei ein erster (204) der Spannteller an der Befestigungsstange (200) festlegbar und in Längsrichtung der Befestigungsstange an der Schulter (302a) vorbeiführbar ist, der zweite, zwischen dem Wagenheber (10) und der die Schulter (302a) bildenden Öffnung (302) anzuordnende Spannteller (206) verschiebbar auf der Befestigungsstange (200) angeordnet ist und einen maximalen Durchmesser aufweist, welcher größer als der kleinste Durchmesser der die Schulter (302a) bildenden Öffnung (302) ist, und der Durchmesser des Abstützelements (208) durch Zusammenpressen des letzteren zwischen den Spanntellern (204, 206) derart veränderbar ist, daß das im spannungsfreien Zustand in Längsrichtung der Befestigungsstange (200) an der Schulter (302a) vorbeiführbare Abstützelement (208) im eingespannten Zustand an der Schulter festgelegt ist.

12. Einrichtung nach Anspruch 11, dadurch gekennzeichnet, daß die beiden Spannteller (204, 206) Öffnungen (216) für ein federnd ausgebildetes Rastelement (214) zum Zusammenhalten der beiden Spannteller aufweisen, welches die von dem ringförmigen Abstützelement (208) gebildete Öffnung durchgreift.

13. Einrichtung nach Anspruch 10 oder 11, dadurch gekennzeichnet, daß das zweite Widerlagerelement (504; 604) als Verdrehsicherung an seinem Umfang wenigstens einen Vorsprung (504b; 604b) zum Eingreifen in eine entsprechende Aussparung (514) desjenigen Teils (500) aufweist, welches die die Schulter bildende Öffnung (502) enthält.

14. Einrichtung nach einem oder mehreren der vorstehenden Ansprüche, dadurch gekennzeichnet, daß die Befestigungsstange (42; 200) eine Gewindestange und das erste Widerlagerelement eine Mutter (66; 212; 512; 612) ist.

15. Einrichtung nach Anspruch 14 und einem der Ansprüche 4 und 6, dadurch gekennzeichnet, daß der Vorsprung (80) an dem von der Mutter (66) abgewandten Ende (46) der Gewindestange (42) angeordnet ist.

16. Einrichtung nach den Ansprüchen 10 und 14, dadurch gekennzeichnet, daß die Mutter (512; 612) am zweiten Widerlagerelement (504; 604) befestigt ist.

17. Einrichtung nach den Ansprüchen 11 und 14, dadurch gekennzeichnet, daß die Mutter (212) am ersten Spannteller (204) befestigt ist.

18. Einrichtung nach Anspruch 14 oder 15, dadurch gekennzeichnet, daß die Mutter (66) mit einem flachen Griffbereich (70) versehen ist, welcher ungefähr in einer zur Gewindestangenachse parallelen Ebene liegt.

19. Einrichtung nach Anspruch 18, dadurch gekennzeichnet, daß der Griffbereich (70) mit einer sich ungefähr senkrecht zur Gewindestangenachse erstreckenden, schlitzförmigen Öffnung (72) zum Hindurchführen eines an der Karosserie verankerbaren Bandes (120) versehen ist.

20. Einrichtung nach einem oder mehreren der vorstehenden Ansprüche, dadurch gekennzeichnet, daß die Befestigungsstange (42) in demjenigen Bereich (44), welcher das Loch (38) der Wagenheberwand (12) durchsetzt, einen von einem Kreis abweichenden Querschnitt und das Loch eine an diese Querschnittsform angepaßte Form aufweist, so daß die Befestigungsstange gegenüber dem Wagenheber (10) unverdrehbar ist.

21. Einrichtung nach Anspruch 20, dadurch gekennzeichnet, daß die Gewindestange (42) in dem besagten Bereich (44) mit einer angepreßten Längsrippe versehen ist.

## Claims

1. Vehicle jack (10) with a device (42, 66, 70, 80; 200, 202, 204, 206, 208) for attachment of the vehicle jack in a motor vehicle, with an attachment rod (42; 200; 704) which is pushable through at least one hole (38; 702) provided on the vehicle jack and through a hub opening (108; 302; 402; 502) of the rim (102; 300; 400; 500) of a spare wheel (100), a first abutment element (66, 70; 204; 512; 706) through which the attachment rod extends, said first abutment element being displaceable along the attachment rod and fixable thereon for tightening the vehicle jack on the spare wheel rim, and a second abutment element (52, 60, 80; 208; 504a) provided at the end region (46) of said attachment rod, said end region being pushable through said hub opening, **characterized in that** the second abutment element (52, 60, 80; 208; 504a) is designed for engaging behind a shoulder (110; 302a; 402a; 502a) formed by the edge of said hub opening, and the attachment device (42, 66, 70, 80; 200, 202, 204, 206, 208) is designed such that after release of the first abutment element (66, 70; 204; 512; 706) and hence of the tightening, the vehicle jack (10) is removable together with the attachment rod (42; 200; 704) from the spare wheel (100; 300; 400; 500).

2. Vehicle jack with a device for attachment of the vehicle jack to the body of a motor vehicle, with an attachment rod which is pushable through at least one hole provided on the vehicle jack, a first abutment element through which the attachment rod extends, said first abutment element being displaceable along the attachment rod and fixable thereon for tightening the vehicle jack, and a second abutment element for anchorage on a body region, said second abutment element being provided at the end region of the attachment rod that faces the body, **characterized in that** the second abutment element is designed for engaging behind a shoulder formed by an edge of said body region, and the attachment device is designed such that after release of the first abutment element and hence of the tightening, the vehicle jack is removable together with the attachment rod from the body.

3. Device as defined in claim 2, characterized in that the second abutment element is designed for engaging behind a shoulder formed by the edge of an opening of said body region, through which opening the attachment rod extends.

4. Device as defined in claim 1, characterized in that the attachment rod (42) carries a projection (80) forming the second abutment element for engaging behind the edge (110) of the hub opening (108).

5. Device as defined in claim 4 for a rim (102), the hub opening (108) of which is provided on the outside (104) of the rim with a collar (110), characterized in that said projection is designed as a hook (80) for engaging behind the rim collar (110).

6. Device as defined in claim 2 or 3, characterized in that the attachment rod carries a projection forming the second abutment element for engaging behind an edge of said body region.

7. Device as defined in claims 3 and 6, characterized in that said projection is designed as a hook for engaging behind a collar provided at the opening of said body region.

8. Device as defined in claim 4 or 6, characterized in that the edge of the projection (80) resting against the aforementioned edge (110) is formed by a plastic part (60).

9. Device as defined in claim 8, characterized in that a sheet metal bracket (52) is attached to the end region (46) of the attachment rod (42) that carries the projection (80), said sheet metal bracket - viewed in the longitudinal direction of the attachment rod (42) - having approximately the shape of a flat U, embracing the attachment rod (42) with its back (56) and holding the plastic part (60) between its legs (58).

10. Device as defined in claim 1 or 3, characterized in that the second abutment element (504) is designed as a disc-shaped element to be arranged on that side of the opening (502) forming the shoulder which faces away from the vehicle jack, the maximum diameter of said element being larger than the smallest diameter of said opening.

11. Device as defined in claim 1 or 3, characterized in that the second abutment element comprises a ring-shaped, elastic support element (208) arranged between two clamping plates (204, 206), a first one (204) of said clamping plates being fixable on the attachment rod (200) and displaceable in the longitudinal direction of the attachment rod past the shoulder (302a), the second clamping plate (206) to be arranged between the vehicle jack (10) and the opening (302) forming the shoulder (302a) being arranged so as to be displaceable on the attachment rod (200) and having a maximum diameter which is larger than the smallest diameter of the opening (302) forming the shoulder (302a), and the diameter of the support element (208) being alterable by compression of the latter between the clamping plates (204, 206) such that the support element (208) which in the tension-free state is displaceable in the longitudinal direction of the attachment rod (200) past the shoulder (302a) is fixed in the clamped state on the shoulder.

12. Device as defined in claim 11, characterized in that the two clamping plates (204, 206) comprise openings (216) for a resiliently designed detent element (214) for holding the two clamping plates together, said detent element extending through the opening formed by the ring-shaped support element (208).

13. Device as defined in claim 10 or 11, characterized in that the second abutment element (504; 604) comprises as means for preventing rotational movement thereof at least one projection (504b; 604b) on its circumference for engagement in a corresponding recess (514) of that part (500) which contains the opening (502) forming the shoulder.

14. Device as defined in one or several of the preceding claims, characterized in that the attachment rod (42; 200) is a threaded rod and the first abutment element a nut (66; 212; 512; 612).

15. Device as defined in claim 14 and one of claims 4 and 6, characterized in that the projection (80) is arranged at the end (46) of the threaded rod (42) that faces away from the nut (66).

16. Device as defined in claims 10 and 14, characterized in that the nut (512; 612) is attached to the second abutment element (504; 604).

17. Device as defined in claims 11 and 14, characterized in that the nut (212) is attached to the first clamping plate (204).

18. Device as defined in claim 14 or 15, characterized in that the nut (66) is provided with a flat gripping area (70) which lies approximately in a plane parallel to the axis of the threaded rod.

19. Device as defined in claim 18, characterized in that the gripping area (70) is provided with a slot-shaped opening (72) extending approximately vertically to the axis of the threaded rod for a band (120) anchorable on the body to be passed therethrough.

20. Device as defined in one or several of the preceding claims, characterized in that the attachment rod (42) has in that region (44) which extends through the hole (38) of the vehicle jack wall (12) a cross section which diverges from a circle, and said hole has a shape adapted to this cross-sectional shape so that the attachment rod is non-rotatable relative to the vehicle jack (10).

21. Device as defined in claim 20, characterized in that the threaded rod (42) is provided in the aforementioned region (44) with a longitudinal fin pressed onto it.

## Revendications

1. Cric (10) doté d'un dispositif (42, 66, 70, 80 ; 200, 202, 204, 206, 208) pour sa fixation dans un véhicule, qui comprend une tige de fixation (42 ; 200 ; 704) susceptible d'être enfilée à travers au moins un trou (38 ; 702) prévu dans le cric, ainsi qu'à travers une ouverture de moyeu (108 ; 302 ; 402 ; 502) de la jante (102 ; 300; 400 ; 500) d'une roue de secours (100), un premier élément d'appui (66, 70 ; 204; 512 ; 766), traversé par la tige de fixation et fixé sur ladite tige, et dont la position peut être modifiée sur celle-ci, pour serrer le cric contre la jante de la roue de secours, ainsi qu'un second élément d'appui (52, 60, 80 ; 208 ; 504a) prévu dans la région terminale (46) de la tige de fixation capable d'être enfilée à travers l'ouverture de moyeu, caractérisé en ce que le second élément d'appui (52, 60, 80 ; 208 ; 504a) est réalisé de manière à engager par l'arrière un épaulement (110 ; 302a ; 402a ; 502a) formé par une bordure de l'ouverture de moyeu, et en ce que le dispositif de fixation (42, 66, 70, 80 ; 200, 202, 204, 206, 208) est réalisé de telle façon qu'après la libération du premier élément d'appui (66, 70 ; 204; 512 ; 705) et ainsi annulation du serrage, le cric peut être enlevé de la roue de secours (100 ; 300 ; 400 ; 500) ensemble avec la tige de fixation (42 ; 200; 704).

2. Cric comportant un dispositif pour sa fixation sur la carrosserie d'un véhicule, comprenant une tige de fixation susceptible d'être enfilée à travers au moins un trou prévu sur le cric, un premier élément d'appui traversé par ladite tige et fixé sur celle-ci, et susceptible d'être déplacé le long de ladite tige, afin de serrer le cric, et comprenant un second élément d'appui, prévu sur la région terminale de la tige de fixation tournée vers la carrosserie, pour l'ancrage sur une partie de la carrosserie, caractérisé en ce que le second élément d'appui est réalisé de manière à engager par l'arrière un épaulement formé par une bordure de la partie de carrosserie, et en ce que le dispositif de fixation est réalisé de telle façon qu'après la libération du premier élément d'appui et ainsi annulation du serrage, le cric peut être enlevé de la carrosserie ensemble avec la tige de fixation.

3. Agencement selon la revendication 2, caractérisé en ce que le second élément d'appui est réalisé de façon à engager par l'arrière un épaulement formé par la bordure d'une ouverture de la partie de carrosserie qui est traversée par la tige de fixation.

4. Agencement selon la revendication 1, caractérisé en ce que la tige de fixation (42) porte une saillie (80) qui forme le second élément d'appui destiné à engager par l'arrière la bordure (110) de l'ouverture de moyeu (108).

5. Agencement selon la revendication 4, pour une jante (102) dont l'ouverture de moyeu (108) est pourvue d'une collerette (110) sur le côté extérieur (104) de la jante, caractérisé en ce que la saillie est formée à la manière d'un crochet (80) pour engager par l'arrière la collerette (110) de la jante.

6. Agencement selon l'une ou l'autre des revendications 2 et 3, caractérisé en ce que la tige de fixation porte une saillie, qui forme le second élément d'appui, pour engager par l'arrière une bordure de la partie de carrosserie.

7. Agencement selon les revendications 3 et 6, caractérisé en ce que la saillie est réalisé sous forme d'un crochet pour engager par l'arrière une collerette prévue au niveau de l'ouverture de la partie de carrosserie.

8. Agencement selon l'une ou l'autre des revendications 4 et 6, caractérisé en ce que l'arête de la saillie (80) appliquée contre ladite bordure (110) est formée par une pièce en matière plastique (60).

9. Agencement selon la revendication 8, caractérisé en ce que sur la région terminale (46) de la tige de fixation (42) qui porte la saillie (80) est fixé un étrier en tôle (52) qui, vu en direction longitudinale de la tige de fixation (42), a approximativement la forme d'un U aplati, qui entoure par son âme (56) la tige de fixation (42) et retient la pièce en matière plastique (62) entre ses bras (58).

10. Agencement selon l'une ou l'autre des revendications 1 et 3, caractérisé en ce que le second élément d'appui (504) est réalisé sous forme d'un élément en forme de disque destiné à être agencé sur le côté détourné du cric de l'ouverture (52) formant l'épaulement, le diamètre maximum dudit élément étant supérieur au plus petit diamètre de l'ouverture.

11. Agencement selon l'une ou l'autre des revendications 1 et 3, caractérisé en ce que le second élément d'appui comprend un élément de soutien (208) annulaire et élastique, agencé entre deux plaques de serrage (204, 206), une première (204) des plaques de serrage étant susceptible d'être fixée sur la tige de fixation (200) et capable d'être déplacée en passant l'épaulement (302a), en direction longitudinale de la tige de fixation, la seconde (206) des plaques de serrage, destinée à être disposée entre le cric (10) et l'ouverture (302) qui forme l'épaulement (302a), étant agencée de manière déplaçable sur la tige de fixation (200) et présente un diamètre maximum supérieur au plus petit diamètre de l'ouverture (302) qui forme l'épaulement (302a), et en ce que le diamètre de l'élément de soutien (208) est modifiable, par écrasement de ce dernier entre les plaques de serrage (204, 206), de façon que l'élément de soutien (208) susceptible d'être déplacé, dans la situation non serrée, en passant l'épaulement (302a) en direction longitudinale de la tige de fixation (200), est appliqué contre l'épaulement dans la situation serrée.

12. Agencement selon la revendication 11, caractérisé en ce que les deux plaques de serrage (204, 206) comportent des ouvertures (216) pour un élément d'enclenchement (214) réalisé de façon élastique pour maintenir ensemble les deux plaques de serrage, ledit élément d'enclenchement traversant l'ouverture formée par l'élément de soutien annulaire (208).

13. Agencement selon l'une ou l'autre des revendications 10 et 11, caractérisé en ce que le second élément d'appui (504 ; 604) comporte comme sécurité anti-rotation au moins une saillie (504b ; 604b) à sa périphérie pour s'engager dans un évidemment correspondant (514) de celles des parties (500) qui contient l'ouverture (502) qui forme l'épaulement.

14. Agencement selon l'une ou plusieurs des revendications précédentes, caractérisé en ce que la tige de fixation (42 ; 200) est une tige filetée et en ce que le premier élément d'appui est un écrou (66 ; 212 ; 512 ; 612).

15. Agencement selon la revendication 14 et l'une des revendications 4 et 6, caractérisé en ce que la saillie (80) est agencée à l'extrémité (46) de la tige filetée (42) éloignée de l'écrou (66).

16. Agencement selon les revendications 10 et 14, caractérisé en ce que l'écrou (512 ; 612) est fixé sur le second élément d'appui (504 ; 604).

17. Agencement selon les revendications 11 et 14, caractérisé en ce que l'écrou (212) est fixé sur la première plaque de serrage (204).

18. Agencement selon l'une ou l'autre des revendications 14 et 15, caractérisé en ce que l'écrou (66) est pourvu d'une zone de saisie aplatie (70) qui est approximativement située dans un plan parallèle à l'axe de la tige filetée.

19. Agencement selon la revendication 18, caractérisé en ce que la zone de saisie (70) est pourvue d'une ouverture (72) en forme de fente qui s'étend approximativement perpendiculairement à l'axe de la tige filetée, pour la traversée d'une bande (120) à ancrer sur la carrosserie.

20. Agencement selon l'une ou plusieurs des revendications précédentes, caractérisé en ce que la tige de fixation (42) présente, dans la région (44) qui traverse le trou (38) de la paroi de crie (12), une section différente d'un cercle, et en ce que le trou présente une forme adaptée à cette section, de sorte que la tige de fixation est empêchée de tourner par rapport au cric (10).

21. Agencement selon la revendication 20, caractérisé en ce que la tige filetée (42) est pourvue d'une nervure longitudinale formée à la presse dans ladite région (44).
